# EUROPÄISCHE PATENTSCHRIFT

(11) **EP 2 627 880 B1**
(45) Veröffentlichungstag und Bekanntmachung des Hinweises auf die Patenterteilung: **16.03.2016**
(21) Anmeldenummer: 11768001.7
(22) Anmeldetag: 11.10.2011
(51) Int. Cl.: F01N 3/20, F02M 53/04

(54) **HALTERUNG FÜR EINEN INJEKTOR**
MOUNTING FOR AN INJECTOR
SUPPORT POUR UN INJECTEUR

(30) Priorität: 17.11.2010 DE 102010051656; 14.10.2010 DE 102010048284
(43) Veröffentlichungstag der Anmeldung: 21.08.2013
(73) Patentinhaber: Continental Automotive GmbH, 30165 Hannover (DE)
(72) Erfinder: NAGEL, Thomas, 51766 Engelskirchen (DE); SEELIGER, Stefan, 99947 Alterstedt (DE); BAUER, Peter, 53721 Siegburg (DE)
(86) Internationale Anmeldenummer: PCT/EP2011/067729
(87) Internationale Veröffentlichungsnummer: WO 2012/049175

(56) Entgegenhaltungen:
- EP-A1- 1 008 732
- EP-A1- 1 662 108
- DE-A1-102006 061 730
- DE-A1-102006 061 733
- DE-A1-102009 014 828
- DE-A1-102009 047 375
- DE-C1- 19 806 265

## Beschreibung

Die vorliegende Erfindung betrifft eine Halterung für einen Injektor, der insbesondere zum Einbringen eines flüssigen Stoffes in eine Brennkraftmaschine und/oder ein Abgas einer Verbrennungskraftmaschine eingerichtet ist.

Es ist bekannt, einer Verbrennungskraftmaschine und/oder einem Abgas der Verbrennungskraftmaschine gezielt Flüssigkeiten zuzuführen, um beispielweise eine Verbrennung von Kraftstoff in der Verbrennungskraftmaschine und/oder eine Behandlung des Abgases zu realisieren. So können solche Injektoren beispielweise eingesetzt werden, um Kraftstoff (z. B. Benzin oder Diesel) in die Brennräume einer Verbrennungskraftmaschine einzuleiten, wobei diese zu vorgegebenen Zeitpunkten geöffnet und geschlossen werden können. Ebenso ist bekannt, Injektoren einzusetzen, die ein Additiv, beispielweise ein Oxidationsmittel und/oder ein Reduktionsmittel, zum Abgas hinzuzuführen, um dort zu gewünschten Zeitpunkten chemische Reaktionen mit den Schadstoffen des Abgases zu bewirken. Als Additiv kommt beispielweise eine Harnstoff-Wasser-Lösung in Betracht, so dass im Abgassystem eine selektive katalytische Reduktion von Stickoxiden (SCR-Verfahren) durchgeführt werden kann.

Bei solchen Halterungen für einen Injektor ist zu berücksichtigen, dass diese häufig in einer Umgebung positioniert sind, wo hohe Temperaturen auftreten. So können diese Halterungen beispielweise an einem Motor oder der Abgasleitung befestigt sein. Dabei tritt immer wieder das Problem auf, dass der Injektor vor einer zu hohen thermischen Belastung geschützt werden muss. Hierzu ist bekannt, beispielweise Isolationsmaterialien oder separate Kühlsysteme vorzusehen. Die bekannten Systeme sind jedoch zum Teil technisch sehr aufwendig und/oder sie können noch keinen ausreichenden Schutz für den Injektor realisieren.

Aus der DE 10 2009 041 828 A1 ist eine Einspritzvorrichtung zur Zugabe einer flüssigen Wirksubstanz in eine Abgasanlage mit einer Halterung bekannt, wobei in der Halterung ein Injektor angeordnet ist.

Aus der DE 10 2006 061 733 A1 ist eine Haltevorrichtung zur Halterung eines Reduktionsmitteldosierventils, an einer Abgasleitung bekannt.

Die DE 10 2006 071 730 A1 offenbart eine SCR-Injektionseinrichtung zur Zugabe eines Reduktionsmittels zu einer Abgasleitung mit einem Injektor an einem Flansch eines Abgasrohrs und einem Kühlkörper zur Kühlung des Injektors.

Die EP 1 662 108 A1 offenbart eine Haltevorrichtung zur Halterung einer Einspritzdüse, wobei in einem Aufnahmekörper ein ringförmiger Kühlkanal angeordnet ist.

Hiervon ausgehend ist es Aufgabe der hier vorliegenden Erfindung, die mit Bezug auf den Stand der Technik geschilderten Probleme zumindest teilweise zu lösen. Insbesondere soll eine Halterung für einen Injektor angegeben werden, die technisch einfach aufgebaut ist, und (gegebenenfalls geregelt) gekühlt werden kann. Zudem soll die Halterung besonders leicht ausgeführt und auf den Betrieb mit deutlichen Temperaturunterschieden angepasst sein.

Diese Aufgaben werden gelöst mit einer Halterung für einen Injektor gemäß den Merkmalen des Patentanspruches 1. Weitere vorteilhafte Ausgestaltungen der Halterung sind in den abhängig formulierten Patentansprüchen angegeben. Es ist darauf hinzuweisen, dass die in den Patentansprüchen einzeln aufgeführten Merkmale in beliebiger, technologisch sinnvoller, Weise miteinander kombiniert werden können und weitere Ausgestaltungen der Erfindung aufzeigen. Die Beschreibung, insbesondere im Zusammenhang mit den Figuren, erläutert die Erfindung weiter und gibt zusätzliche Ausführungsbeispiele an.

Die erfindungsgemäße Halterung für einen Injektor weist zumindest einen Grundkörper und eine Kappe zur gemeinsamen Aufnahme des Injektors auf. Der Grundkörper ist mit miteinander verbundenen Blechen gebildet, die zusammen zumindest eine Ringkammer bilden, welche sich um die Aufnahme herum erstreckt, wobei die zumindest eine Ringkammer mit einem Kühlmedium zulauf und einem Kühlmedium ablauf verbindbar ist.

Hierbei ist bevorzugt, dass der Grundkörper und die Kappe im Wesentlichen so gestaltet sind, dass diese den Injektor praktisch vollständig aufnehmen können. Weiter ist bevorzugt, dass sowohl die Kappe als auch der Grundkörper mit dünnwandigen (metallischen) Bauteilen bereitgestellt wird, um so ein geringes Gewicht der Halterung und eine einfachere Herstellung zu realisieren.

Das heißt mit anderen Worten auch, dass der Grundkörper mindestens zwei, gegebenenfalls komplex geformte, Ringbleche aufweist, die teilweise einen Hohlraum begrenzen. Die Bleche sind dann so zusammengefügt, dass deren Hohlräume zusammen die zumindest eine Ringkammer bilden. Dabei ist vorgesehen, dass die zumindest eine Ringkammer um eine innen liegende Aufnahme für den Injektor herum ausgebildet ist. Somit ist es möglich, den Injektor in der Halterung so zu platzieren, dass ein wesentlicher Anteil des Injektors von der radial außen anliegenden Ringkammer umschlossen ist. Die Ringkammer dient insbesondere dazu, einen Abstand des Injektors hin zur äußeren Oberfläche der Halterung zu realisieren, so dass die Ringkammer dazu genutzt werden kann, eine Hitzebarriere für den Injektor darzustellen.

Gemäß einer Weiterbildung der Halterung wird vorgeschlagen, dass die zumindest eine Ringkammer wenigstens teilweise auch von einem Gehäuse eines integrierten Injektors gebildet ist. Dies heißt mit anderen Worten auch, dass die miteinander verbundenen Bleche nicht allein die Ringkammer vollständig umschließen müssen, sondern diese können beispielweise hin zur Aufnahme einen Spalt zueinander bilden, an dem dann das Gehäuse eines integrierten Injektors positioniert ist. In diesem Fall ist die zumindest eine Ringkammer dann (nur) durch das erste Blech, das zweite Blech und das Gehäuse des integrierten Injektors begrenzt. Dies hat beispielweise den Vorteil, dass für den Fall, dass die Ringkammer mit einem Kühlmedium beaufschlagt wird, dieses Kühlmedium in direktem Kontakt mit dem Gehäuse des Injektors kommen kann und somit eine effektive Kühlung erreicht wird. Außerdem kann so Material für die Halterung des Injektors eingespart werden, wodurch Gewicht und Materialkosten weiter reduziert werden können.

Darüber hinaus wird als vorteilhaft angesehen, dass die Bleche des Grundkörpers miteinander verlötete Tiefziehbauteile sind. Ganz besonders bevorzugt ist, dass die Bleche dann einen Überlappungsbereich ausbilden, in dem eine dichte Lötverbindung (insbesondere als umlaufende Naht) vorgesehen ist. Als Tiefziehbauteile kommen beispielsweise Bleche mit einer Dicke von 0,1 bis 2 mm [Millimeter] in Betracht, wobei als Material beispielsweise Edelstahl, Stahl oder Aluminium verwendet werden kann. Alternativ kann auch eine Schweißnaht zur Verbindung der Bleche eingesetzt werden, insbesondere hergestellt mit einem Laserschweißverfahren. Ebenso besteht die Möglichkeit, die Verbindung der Bleche mittels Bördeln oder Crimpen vorzunehmen.

Gemäß einer Weiterbildung der Halterung wird vorgeschlagen, dass der Grundkörper mit dem Gehäuse eines integrierten Injektors verklebt oder vercrimpt ist. Dies trifft insbesondere für die Variante zu, dass auch das Gehäuse eines integrierten Injektors dazu genutzt wird, die zumindest eine Ringkammer zu begrenzen. Somit ist besonders bevorzugt, dass jeweils ein Blech benachbart zu dem Bereich des Gehäuses, das dort zur Ausbildung der Ringkammer genutzt wird, jeweils eine Klebeverbindung ausgeführt ist. Solche Klebeverbindungen lassen sich sehr einfach und mit geringem Kostenaufwand bereitstellen. Die Dichtheit des Systems kann gegebenenfalls durch geeignete Dichtungen, die benachbart zur zumindest einen Klebverbindung ausgeführt sind, realisiert werden. Unter Crimpen (Bördeln) wird ein Fügeverfahren verstanden, bei dem zwei Komponenten (hier Grundkörper und Gehäuse) durch plastische Verformung miteinander verbunden werden. Zudem wäre auch möglich, den Grundkörper mit dem Gehäuse zu verschweißen oder dergleichen.

Darüber hinaus wird auch vorgeschlagen, dass die zumindest eine Ringkammer eine Aufweitung hat, in der ein elektrischer Motor eines integrierten Injektors zumindest teilweise positioniert ist. Hiermit wird insbesondere realisiert, dass z. B. die Spule des elektrischen Motors zum Betrieb des integrierten Injektors gekühlt werden kann. Die Aufweitung hat dabei zur Folge, dass die Halterung sehr platzsparend ausgebildet sein kann. So ist die Ringkammer beispielweise im Bereich der Fixierung zur Verbrennungskraftmaschine, beziehungsweise der Abgasanlage, mit einem kleineren mittleren Radius ausgeführt, als dies weiter weg von der Verbrennungskraftmaschine, beziehungsweise der Abgasanlage, der Fall ist. Auch wenn grundsätzlich möglich ist, jeden Bereich mit einer separaten Ringkammer auszuführen, ist bevorzugt, dass nur genau eine einzelne Ringkammer mit den Blechen des Grundkörpers ausgeformt ist. Zudem kann es auch vorteilhaft sein, dass weitere Elemente des Injektors benachbart zu der Ringkammer positioniert sind und demnach ebenfalls im Betrieb gekühlt werden können. Dies gilt beispielsweise für einen Stecker und/oder Abschnitte der Leitung des Injektionsfluides, in dem das Injektionsfluid (zeitweise) im Injektor bevorratet wird, wie beispielsweise auch zwischen dem Ventil und der Auslassdüse.

Einer Weiterbildung der Halterung zur Folge führt ein elektrischer Anschluss eines integrierten Injektors zwischen dem Grundkörper und der Kappe aus der Halterung heraus. Das heißt mit anderen Worten insbesondere, dass die Halterung so ausgeführt ist, dass der Injektor praktisch vollständig in der Halterung aufgenommen ist, insbesondere nach Art eines Sandwichs zwischen der (oberen) Kappe und einem (unteren) Grundköper. Der elektrische Anschluss dient insbesondere dazu, einen Motor beziehungsweise eine Dosiervorrichtung für die Zufuhr eines Injektionsfluides zu kontrollieren. Gerade in Nachbarschaft zu der aufgeweiteten Ringkammer kann eine geschützte Positionierung des elektrischen Anschlusses erfolgen. Zudem wird so ein ausreichend großer Abstand hin zur heißen Umgebung erreicht, insbesondere im Zusammenspiel mit einer in der Ringkammer realisierten, aktiv geregelten Kühlung.

Die zumindest eine Ringkammer ist mit einem Kühlmediumzulauf und einem Kühlmediumablauf verbindbar. Hierzu können beispielweise Löcher in den Blechen, insbesondere in nur einem einzigen Blech, vorgesehen sein, über die der Zulauf beziehungsweise der Ablauf des Kühlmediums realisiert werden kann. Als Kühlmedium kommt hierbei insbesondere Wasser in Betracht. Das Kühlmedium kann auch ein Gemisch umfassend Wasser sowie mindestens ein Frostschutzmittel sein. Durch das zumindest eine Frostschutzmittel ist die Einfriertemperatur des Kühlmediums abgesenkt. So kann verhindert werden, dass das Kühlmedium einfriert. Je nach Ausführungsvariante der Halterung kann die Halterung durch einfrierendes Reduktionsmittel beschädigt werden. Daher ist es für bestimmte Ausführungsvarianten der Halterung gegebenenfalls erforderlich, dass das Einfrieren effektiv verhindert wird. Vorzugsweise weist das Kühlmedium hierzu einen Anteil von zumindest 5 Gew.-% (Gewichts-Prozent), vorzugsweise von zumindest 15 Gew.%an Frostschutzmittel auf. Die Einfriertemperatur des Kühlmediums ist durch das Frostschutzmittel vorzugsweise auf unter -20 °C abgesenkt, vorzugsweise sogar auf unter -30 °C.

Weiterhin wird hier auch vorgeschlagen, dass die Kappe mit einem Injektionsfluidanschluss verbindbar ist und zumindest Zentrierungsmittel oder Dehnungskompensationsmittel aufweist, bevorzugt ist beides vorhanden. Als Injektionsfluid kommt beispielweise Kraftstoff oder Reduktionsmittel, wie beispielweise eine Harnstoff-Wasser-Lösung, in Betracht. Hierzu kann die Kappe beispielweise eine Art Stecker oder Stutzen aufnehmen, über den das Injektionsfluid hin zum integrierten Injektor geleitet wird. Dazu liegt die Kappe beispielweise auch fluiddicht an dem Grundkörper und/oder dem elektrischen Anschluss des integrierten Injektors an. So kann der Injektor aus einem Innenraum der Kappe bzw. aus dem Stecker das zu fördernde Injektionsfluid bedarfsgerecht abziehen. Zur Vermeidung von Fehlfunktionen ist es daher sinnvoll, die Kappe bzw. den Stecker gegenüber dem integrierten Injektor auszurichten. In einem Verbindungsbereich, in welchem der Stecker und der Injektor miteinander verbunden sind, kann zur Stabilisierung der Verbindung ein Einsteckrohr aus Metall oder aus einem ähnlich stabilen Material eingesetzt werden. Dies erfolgt insbesondere zur Gewährleistung der Dichtheit zwischen Kappe und Injektor. Außerdem ist zu berücksichtigen, dass das Injektionsfluid gegebenenfalls gefrieren kann, was regelmäßig mit einer Volumenzunahme des Injektionsfluids im Bereich der Kappe bzw. des Steckers einhergeht. Um nunmehr in einem vorgegebenen Maße auch solche thermischen Volumenänderungen kompensieren zu können, sollte die Kappe mit wenigstens einem Dehnungskompensationsmittel versehen sein, das bevorzugt in der Kappe integriert ist. Das Dehnungskompensationsmittel ist insbesondere so ausgeführt, dass in einem Teilvolumen des Innenraums der Kappe die gesamte Volumenausdehnung des dort versammelten Injektionsfluids und/oder eine daraus resultierende Verlagerung des Steckers kompensiert werden kann. Somit ist das Dehnungskompensationsmittel vorzugsweise ein separates Bauteil in der Kappe, beispielweise ausgeführt mit mindestens einem Federelement.

Gemäß einer Weiterbildung der Halterung kann zudem in der zumindest einen Ringkammer wenigstens ein Leitblech vorgesehen sein, das die Ringkammer in eine innere Strömungskammer und eine äußere Strömungskammer unterteilt.

Gemäß anderen einer Weiterbildung der Halterung kann in der zumindest einen Ringkammer wenigstens ein Leitblech vorgesehen sein, dass die Ringkammer in zumindest zwei Strömungskammern unterteilt. Die Ringkammer kann beispielsweise von wenigstens einem Leitblech in zwei Strömungskammern unterteilt sein, welche den Injektor jeweils (etwa) halbkreisförmig umgeben. Es ist möglich, dass der Ringraum von wenigstens einem Leitblech in eine obere Strömungskammer und eine untere Strömungskammer unterteilt, wobei die untere Strömungskammer sich an einem Auslassende des Injektors bzw. an der Abgasleitungsseite der Halterung befindet, während die obere Strömungskammer hin zu dem Injektionsfluidanschluss ausgerichtet ist.

Bezüglich dieser Ausgestaltung ist ganz besonders bevorzugt, dass ein einzelnes Leitblech (das bevorzugt ebenfalls ein metallisches Tiefziehbauteil ist) in der Ringkammer angeordnet ist. Das Leitblech hat bevorzugt eine Materialdicke von zumindest 3 mm [Millimeter], insbesondere von zumindest 5 mm, so dass das Leitblech auch als ein den Injektor versteifendes Bauteil fungiert. Zudem können an dem Leitblech Kragen, Aushalsungen, etc. vorgesehen sein, die einen sicheren Anschluss des Kühlmediumkreislaufs gewährleisten.

Das Leitblech ist z. B. so an dem zweiten Blech befestigt, dass die Verbindungsnaht umschließend ausgeführt und zwischen dem Kühlmediumzulauf und dem Kühlmediumablauf positioniert ist. Von dort ausgehend erstreckt sich das Leitblech bevorzugt hin zur Ausgabeöffnung des Injektors bzw. zum Montageort der Halterung an einer Abgasleitung oder einem Motor. Weiterhin ist bevorzugt, dass der größte Teil des Leitblechs mit Abstand zum ersten Blech und zum zweiten Blech in dem Ringraum positioniert ist. Dabei werden bevorzugt zwei konzentrisch zueinander ausgebildete Strömungskammern gebildet, nämlich eine innere Strömungskammer und eine äußere Strömungskammer. Mit einem solchen Leitblech kann nunmehr erreicht werden, dass das in die Halterung eintretende Kühlmedium mit dem Leitblech zunächst am äußeren zweiten Blech entlang (nach unten) hin zur Injektoröffnung gefördert wird, dort das Leitblech umströmt und damit in die innere Strömungskammer einströmt, die zwischen dem Leitblech und dem Gehäuse des Injektors bzw. dem ersten Blech gebildet ist. Von dort aus wird das Kühlmedium dann zum Kühlinittelablauf geführt. Auf diese Weise wird zumindest teilweise erreicht, dass das Kühlmedium außen in einer anderen bzw. entgegengesetzten Richtung strömt, und in der inneren Strömungskammer ein intensiver Wärmeaustausch aufgrund der kleineren Dimensionen hin zum Injektor bzw. dem elektrischen Motor des Injektors erfolgen kann. Bevorzugt ist zudem, dass die innere Strömungskammer und die äußere Strömungskammer in etwa das gleiche Volumen aufweisen, folglich also die Ringkammer mit dem Leitblech in etwa zu gleichen Teilen unterteilt ist.

In einer weiteren Ausführungsvariante ist es auch möglich, dass der Kühlmediumzulauf und der Kühlmediumablauf so mit dem Ringraum verbunden sind, dass das Kühlmedium zunächst die innere Strömungskammer zwischen dem Leitblech und dem ersten Blech durchströmt und anschließend in die äußere Strömungskammer zwischen dem zweiten Blech und dem Leitblech umgelenkt wird. Dazu ist es sinnvoll, dass der Kühlmediumzulauf an die innere Strömungskammer und der Kühlmediumablauf an die äußere Strömungskammer angeschlossen ist. So kann erreicht werden, dass in der inneren Strömungskammer, unmittelbar am Injektor Kühlmittel mit besonders niedriger Temperatur vorliegt und das bereits erwärmte Kühlmittel durch die äußere Strömungskammer zu dem Kühlmediumablauf abgeführt wird. So kann eine besonders niedrige Temperatur des Injektors erreicht werden.

Grundsätzlich wäre es auch möglich, die Ringkammer mit zwei benachbarten Strömungskammern auszuführen, wobei diese zum Beispiel durch eine linke Strömungskammer und eine rechte Strömungskammer unterteilt ist. Das Kühlmedium würde so in die eine Strömungskammer lateral einströmen, via einen Verbindungskanal in die andere Strömungskammer überführt werden und dort lateral und entgegengesetzt wieder abgeführt. Eine solche Aufteilung kann sinnvoll sein, wenn die Wärmebelastung des Injektors von einer Seite her besonders groß ist, also der Injektor beispielsweise mit einem spitzen Winkel zur heißen Abgasleitung positioniert wird.

Die Erfindung findet insbesondere Einsatz bei einer Einspritzvorrichtung für ein Fluid mittels eines Injektors, wobei der Injektor in einer Halterung der hier erfindungsgemäß beschriebenen Art integriert ist und die zumindest eine Ringkammer mit einem Kühlmediumkreislauf verbunden ist. Eine solche Einspritzvorrichtung kann insbesondere im Zusammenhang mit der Zufuhr eines Fluids zur Verbrennungskraftmaschine beziehungsweise einer Abgasleitung eines Kraftfahrzeuges vorgesehen sein. Das Fluid kann dabei in einem separaten Reservoir bevorratet und bedarfsgerecht zum Injektor geleitet werden. Ebenso ist ein Kühlmediumkreislauf vorgesehen, wobei beispielweise Wasser nach Art eines Kreislaufes wiederholt durch die Ringkammer der Halterung hindurch gefördert wird, so dass dort eine effektive Kühlung stattfinden kann.

Die Erfindung wird nachfolgend anhand der Figuren näher erläutert. Es ist darauf hinzuweisen, dass die Figuren besonders bevorzugte Ausführungsvarianten der Erfindung aufzeigen, diese jedoch nicht darauf beschränkt ist. Die Bezugszeichen in den Figuren bezeichnen regelmäßig gleiche Bauteile. Es zeigen schematisch:
- Fig. 1:: einen Querschnitt durch eine Ausführungsvariante der erfindungsgemäßen Halterung mit integriertem Injektor,
- Fig. 2:: einen Querschnitt durch eine weitere Ausführungsvariante der erfindungsgemäßen Halterung mit integriertem Injektor, und
- Fig. 3:: ein Kraftfahrzeug mit einer entsprechenden Einspritzvorrichtung.

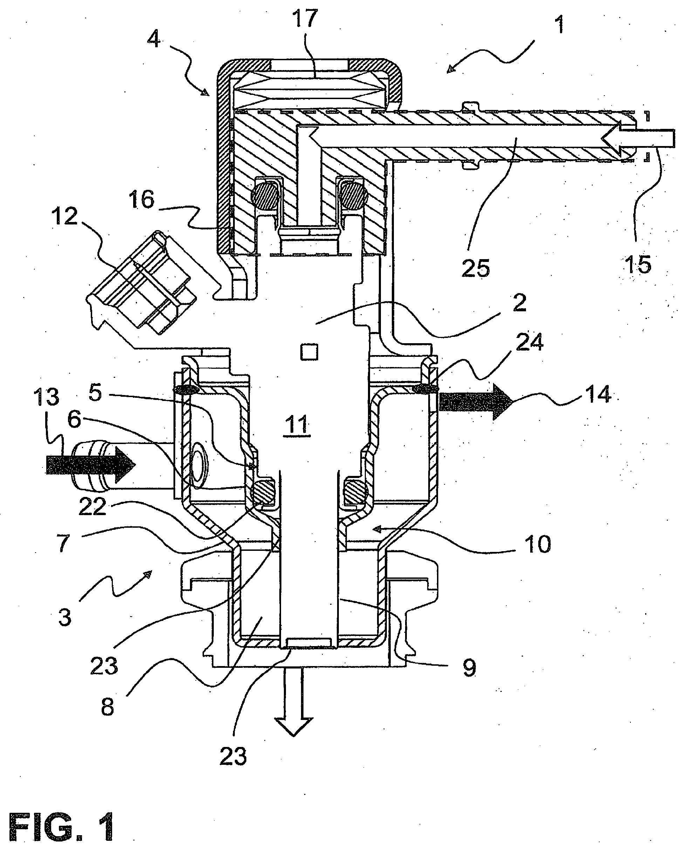

Fig. 1 zeigt in einem Querschnitt schematisch den Aufbau einer Halterung 1 für einen Injektor 2, der hier bereits in die Halterung 1 integriert ist. Unten in Fig. 1 ist die Verbrennungskraftmaschine 21 zu erkennen, wobei der Grundkörper 3 der Halterung 1 in einem Kanal beziehungsweise einer Öffnung der Verbrennungskraftmaschine 21 hineinragend angeordnet ist. Der Grundkörper 3 ist hierbei mit einem ersten Blech 6 und einem zweiten Blech 7 ausgebildet. Dabei ist die Ausgestaltung so, dass das zweite Blech 7 praktisch komplett die äußere Oberfläche des Grundkörpers 3 ausbildet. Das zweite Blech 7 und das erste Blech 6 sind dabei als Tiefbauteile ausgeführt. Das erste Blech 6 bildet im oberen Bereich des Grundkörpers 3 einen Anlagebereich beziehungsweise Überlappungsbereich mit dem zweiten Blech 7 aus, wobei dort eine Lotverbindung 24 ausgeführt ist. Das erste Blech 6 erstreckt sich nun beabstandet zum zweiten Blech 7 in innere Bereiche des zweiten Blechs 7. Durch diesen Abstand des ersten Bleches 6 und des zweiten Bleches 7 wird eine Ringkammer 8 gebildet. Die Kontur des ersten Bleches 6 ist dabei so gewählt, dass eine passende Aufnahme 5 für den Injektor 2 gebildet ist.

Bei der hier veranschaulichten Ausführungsvariante wird die Ringkammer 8 nicht allein durch das erste Blech 6 und das zweite Blech 7 gebildet. Vielmehr dient hier auch ein Gehäuse 9 des Injektors 2 teilweise zur Begrenzung der Ringkammer 8. Hierzu sind das erste Blech 6 und das zweite Blech 7 voneinander beabstandet an dem Gehäuse 9 anliegend ausgeführt. In diesen Anlagebereichen ist eine Klebverbindung 23 ausgeführt, so dass das erste Blech 6 und das zweite Blech 7 jeweils mit dem Gehäuse 9 des Injektors 2 verklebt sind. Aus Dichtigkeitsgründen kann es sinnvoll sein, benachbart zu der oberen Klebverbindung 23 eine zusätzliche Dichtung 22 vorzusehen, beispielweise nach Art eines O-Ringes, so dass verhindert wird, dass in der Ringkammer 8 befindliches Kühlmedium dort austritt.

Die Fig. 1 veranschaulicht weiter, dass der Injektor 2 einen zentralen elektrischen Motor 11 aufweist, wobei dort der Injektor 2 verbreitert ist. Um hier eine passende Aufnahme 5 auszubilden, ist eine Aufweitung 10 der Ringkammer 8 vorgesehen. Dadurch kann erreicht werden, dass sich auch außen um den elektrischen Motor 11 des Injektors 2 Kühlmedium befindet, der den dauerhaften Betrieb des Injektors 2 gewährleistet. In dem äußeren zweiten Blech 7 sind hierfür entsprechende Maßnahmen, beispielweise Öffnungen, zur Realisierung eines Kühlmediumzulaufs 13 und eines Kühlmediumablaufs 14 vorgesehen, wobei bevorzugt ist, dass der Kühlmediumzulauf 13 näher zum Auslass des Injektors 2 beziehungsweise näher zur heißen Befestigung der Halterung 1 positioniert ist.

Oberhalb des Grundkörpers 3 ist die Kappe 4 vorgesehen. Dabei ist auch die Kappe 4 als ein im Wesentlichen zylindrisches, einseitig verschlossenes Tiefziehbauteil ausgeführt. Diese Kappe 4 nimmt einen Stecker 25 (nach Art eines Injektionsfluidanschlusses 15) auf, der mit dem integrierten Injektor 2 zusammenwirkt. Die Kappe 4 ist mit dem Grundkörper 3, hier insbesondere mit dem ersten Blech 6 durch Löten verbunden. In einem mittleren Bereich der Halterung 1, also zwischen Grundkörper 3 und Kappe 4, ragt der elektrische Anschluss 12 des Injektors 2 heraus. Dort können dann die Steuerleitungen angeschlossen werden, die den Betrieb des Injektors 2 regeln. In der Regel wird die äußere Form der Kappe 4 so gestaltet sein, dass der Stecker 25 für den Anschluss des Injektionsfluids auf dem Injektor 2 zentriert ist, so dass eine dichte Verbindung des Steckers 25 mit dem Injektor 2 realisiert ist. Hierfür können aber auch besonders geeignete Führungsflächen beziehungsweise Führungskanten (an der Kappe 4) vorgesehen sein. Da in dem Stecker 25 gegebenenfalls Injektionsfluid für einen langen Zeitraum zwischengelagert wird, beispielweise bei einem langen Stillstand des Kraftfahrzeuges, ist zu berücksichtigen, dass sich das Injektionsfluid dort wegen Eisbildung hinsichtlich des Volumens vergrößern kann. Dies kann dazu führen, dass gegebenenfalls der Kontakt zwischen Stecker 25 und Injektor 2 verändert wird. Um dies zu kompensieren, ist hier im Bereich der Kappe 2 eine Tellerfeder als Dehnungskompensationsmittel 17 vorgesehen, die eine (exakt begrenzte) Relativbewegung zur Druckentlastung ermöglicht.

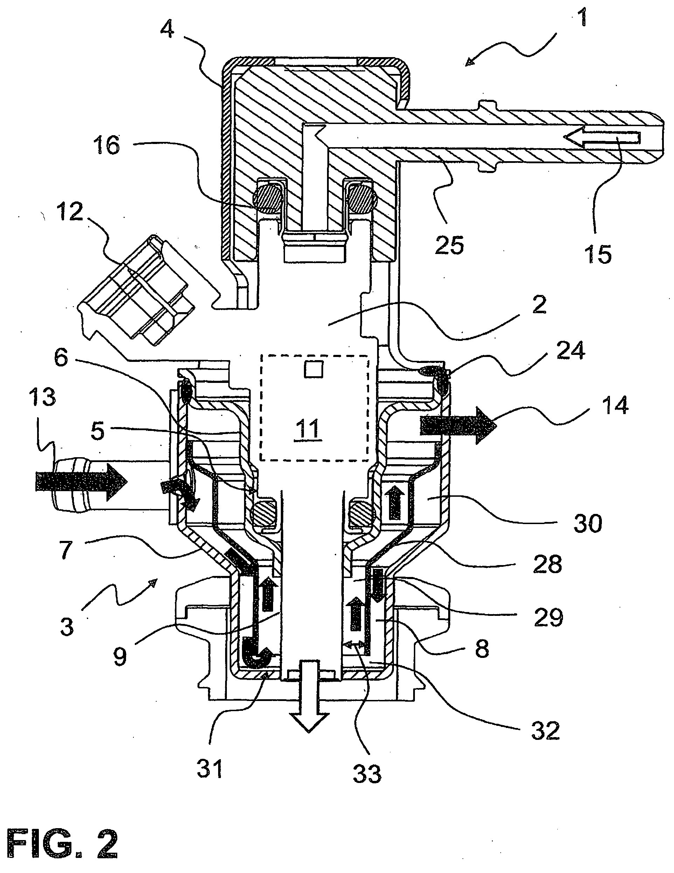

Fig. 2 zeigt einen Querschnitt durch eine weitere Ausführungsvariante der erfindungsgemäßen Halterung 1 mit integriertem Injektor 2. Es sei darauf hingewiesen, dass die Bezugszeichen, wie sie im Zusammenhang mit Fig. 1 verwendet wurden, hier gleiche Bauteile bezeichnen. Im Folgenden wird daher insbesondere auf die gegenüber Fig. 1 unterschiedlichen Merkmale hingewiesen.

Zunächst sei im Zusammenhang mit dem Stecker 2 5 angemerkt, dass dieser hier ebenfalls mit Zentrierungsmitteln 16 in der Kappe 4 ausgerichtet wird. Die Zentrierungsmittel 16 sind hierbei bezüglich des Steckers 25 innen liegend und ausgehend vom Injektor 2 z. B. nach Art von Federelementen ausgebildet.

Als wesentlicher Unterschied zu Fig. 1 zeigt die Fig. 2 ein einzelnes Leitblech 28, welches in der Ringkammer 8 positioniert ist. Im oberen Teilabschnitt des zweiten Bleches 7, nämlich zwischen dem Kühlmediumzulauf 13 und dem Kühlmediumablauf 14, ist dieses Leitblech 28 fixiert, insbesondere verschweißt (z. B. durch Laserschweißen) oder verklebt. Von dort aus verjüngt sich das Leitblech 28 in Richtung des ersten Bleches 6, bis es etwa mittig zwischen dem ersten Blech 6 und dem zweiten Blech 7 verläuft. Von da an folgt es (nach unten) hin zur Öffnung des Injektors 2 bzw. dem Grund 31 der Ringkammer 8 in etwa mittig dem Verlauf von dem zweiten Blech 7 bzw. dem ersten Blech 6/dem Gehäuse 9 des Injektors 2. Kurz vor Erreichen des Grundes 31 der Ringkammer 8 (bspw. mit einem Spalt 32, der in etwa einem Abstand 33 des Leitbleches 28 zu den seitlichen Berandungen entspricht) endet das Leitblech 28. Die Form des Leitbleches 28 lässt sich bspw. nach Art eines mehrfach abgesetzten Konus beschreiben. Mit Hilfe dieses Leitbleches 28 wird eine innere Strömungskammer 29 und eine äußere Strömungskammer 30 gebildet, die nur über den Spalt 32 nahe des Grundes 31 der Ringkammer 8 miteinander verbunden sind. Das Leitblech 28 erfüllt dabei die Aufgabe, eine gezielte Strömungsrichtung bzw. einen vorgegebenen Kontakt des Kühlmediums mit Teilen der Halterung 1 bzw. dem Injektor 2 zu realisieren. Bei der hier angegebenen Durchströmungsrichtung für das Kühlmedium tritt das Kühlmedium zunächst über den Kühlmediumzulauf 13 in die Ringkammer 8 ein, nämlich in die äußere Strömungskammer 30. Das Kühlmedium wird dann durch das Leitblech 28 und das zweite Blech 7 nach unten Richtung der Öffnung des Injektors 2 geführt. Hat es den Grund 31 der Ringkammer 8 erreicht, umströmt das Kühlmedium das Leitblech 28 und tritt in die innere Strömungskammer 29 ein. Dort strömt es, geführt durch das Leitblech 28 einerseits, sowie das Gehäuse 9 des Injektors bzw. das erste Blech 6 andererseits, wieder aufwärts hin zum Kühlmediumablauf 14. Eine solche gezielte Strömungsführung hat insbesondere den Vorteil, dass das Kühlmedium einen intensiven Wärmeaustausch in dem besonders heißen Bereich der Halterung 1, nahe des Grundes 31 der Ringkammer 8 bzw. in unmittelbarer Nähe des Injektors 2, sichergestellt ist. Zudem sei noch darauf hingewiesen, dass zwischen dem zweiten Blech 7 und dem ersten Blech 6 im Bereich des Grundes 31 eine Verbindung ausgeführt sein kann, insbesondere mittels Löten, Schweißen oder Crimpen.

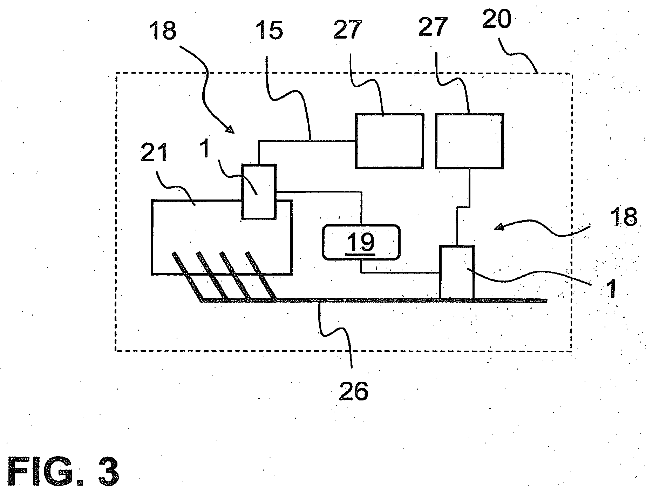

Fig. 3 veranschaulicht schematisch noch einmal einen möglichen Aufbau solcher Einspritzvorrichtungen 18. Zu erkennen ist hierbei die Verbrennungskraftmaschine 21 mit der Abgasleitung 26 im Kraftfahrzeug 20, wobei eine Halterung 1 an der Verbrennungskraftmaschine 21 und/oder der Abgasleitung befestigt sein kann. So kann von dem integrierten Injektor 2 in die Verbrennungskraftmaschine 21 und/oder die Abgasleitung 26 das gewünschte Injektionsfluid zugegeben werden, dass in einem geeigneten Reservoir 27 bevorratet und mittels des Injektionsfluidanschlusses 15 zugeführt wird. Die Halterung 1, insbesondere der Grundkörper 3 der Halterung 1 ist dabei mit einem (gemeinsamen) Kühlmediumkreislauf 19 verbunden, so dass stets Kühlmedium mit einer gewünschten Tiefentemperatur der Ringkammer in dem Grundkörper 3 zugeführt werden kann.

Somit löst die vorliegende Erfindung zumindest teilweise die mit Bezug auf den Stand der Technik geschilderten Probleme. Insbesondere wird eine Halterung für einen Injektor angegeben, die technisch einfach aufgebaut ist, und (gegebenenfalls geregelt) gekühlt werden kann. Zudem ist die Halterung besonders leicht ausgeführt und auf den Betrieb mit deutlichen Temperaturunterschieden angepasst.

### Bezugszeichenliste

- 1: Halterung
- 2: Injektor
- 3: Grundkörper
- 4: Kappe
- 5: Aufnahme
- 6: erstes Blech
- 7: zweites Blech
- 8: Ringkammer
- 9: Gehäuse
- 10: Aufweitung
- 11: elektrischer Motor
- 12: elektrischer Anschluss
- 13: Kühlmediumzulauf
- 14: Kühlmediumablauf
- 15: Injektionsfluidanschluss
- 16: Zentrierungsmittel
- 17: Dehnungskompensationsmittel
- 18: Einspritzvorrichtung
- 19: Kühlmediumkreislauf
- 20: Kraftfahrzeug
- 21: Verbrennungskraftmaschine
- 22: Dichtung
- 23: Klebverbindung
- 24: Lotverbindung
- 25: Stecker
- 26: Abgasleitung
- 27: Reservoir
- 28: Leitblech
- 29: innere Strömungskammer
- 30: äußere Strömungskammer
- 31: Grund
- 32: Spalt
- 33: Abstand

## Patentansprüche

1. Halterung (1) für einen Injektor (2), aufweisend zumindest einen Grundkörper (3) und eine Kappe (4) zur gemeinsamen Aufnahme (5) des Injektors (2), wobei der Grundkörper (3) mit miteinander verbundenen Blechen (6, 7) gebildet ist, die zusammen zumindest eine Ringkammer (8) bilden, welche sich um die Aufnahme (5) herum erstreckt, wobei die zumindest eine Ringkammer (8) mit einem Kühlmediumzulauf (13) und einem Kühlmediumablauf (14) verbindbar ist.

2. Halterung (1) nach Patentanspruch 1, bei der die zumindest eine Ringkammer (8) wenigstens teilweise auch mit einem Gehäuse (9) eines integrierten Injektors (2) gebildet ist.

3. Halterung (1) nach Patentanspruch 1 oder 2, bei der die Bleche (6, 7) des Grundkörpers (3) miteinander verlötete Tiefziehbauteile sind.

4. Halterung (1) nach einem der vorhergehenden Patentansprüche, bei der der Grundkörper (3) mit einem Gehäuse (9) eines integrierten Injektors (2) verklebt oder gecrimpt ist.

5. Halterung (1) nach einem der vorhergehenden Patentansprüche, bei der die zumindest eine Ringkammer (8) eine Aufweitung (10) hat, in der ein elektrischer Motor (11) eines integrierten Injektors (2) zumindest teilweise positioniert ist.

6. Halterung (1) nach einem der vorhergehenden Patentansprüche, bei der ein elektrischer Anschluss (12) eines integrierten Injektors (2) zwischen dem Grundkörper (3) und der Kappe (4) aus der Halterung (1) herausfuhrt.

7. Halterung (1) nach einem der vorhergehenden Patentansprüche, bei der die Kappe (4) mit einem Injektionsfluidanschluss (15) verbindbar ist und zumindest Zentrierungsmaittel (16) oder Dehnungskompensationsmittel (17) aufweist.

8. Halterung (1) nach einem der vorhergehenden Patentansprüche, bei der in der zumindest einen Ringkammer (8) wenigstens ein Leitblech (28) vorgesehen ist, dass die Ringkammer (8) in eine innere Strömungskammer (29) und eine äußere Strömungskammer (30) unterteilt.

9. Einspritzvorrichtung (18) für ein Fluid mittels eines Injektors (2), wobei der Injektor (2) in einer Halterung (1) gemäß einem der vorhergehenden Patentansprüche integriert ist und die zumindest eine Ringkammer (8) mit einem Kühlmediumkreislauf (19) verbunden ist.

## Claims

1. Mounting (1) for an injector (2), having at least one main body (3) and having a cap (4) for the common receptacle (5) of the injector (2), wherein the main body (3) is formed by interconnected metal sheets (6, 7) which together form at least one annular chamber (8) which extends around the receptacle (5), wherein the at least one annular chamber (8) can be connected to a cooling medium inlet (13) and to a cooling medium outlet (14).

2. Mounting (1) according to Patent Claim 1, in which the at least one annular chamber (8) is at least partially also formed by a housing (9) of an integrated injector (2).

3. Mounting (1) according to Patent Claim 1 or 2, in which the metal sheets (6, 7) of the main body (3) are deep-drawn components that are brazed to one another.

4. Mounting (1) according to one of the preceding patent claims, in which the main body (3) is adhesively bonded or crimped to a housing (9) of an integrated injector (2).

5. Mounting (1) according to one of the preceding patent claims, in which the at least one annular chamber (8) has a widening (10) in which an electric motor (11) of an integrated injector (2) is at least partially positioned.

6. Mounting (1) according to one of the preceding patent claims, in which an electrical terminal (12) of an integrated injector (2) leads out of the mounting (1) between the main body (3) and the cap (4).

7. Mounting (1) according to one of the preceding patent claims, in which the cap (4) can be connected to an injection fluid port (15) and has at least centring means (16) or expansion compensation means (17).

8. Mounting (1) according to one of the preceding patent claims, in which at least one guiding metal sheet (28) is provided in the at least one annular chamber (8), which guiding metal sheet divides the annular chamber (8) into an inner flow chamber (29) and an outer flow chamber (30).

9. Injection device (18) for injecting a fluid by means of an injector (2), wherein the injector (2) is integrated in a mounting (1) according to one of the preceding patent claims and the at least one annular chamber (8) is connected to a cooling medium circuit (19).

## Revendications

1. Support (1) pour un injecteur (2), comportant au moins un corps (3) principal et un couvercle (4) pour former en commun un réceptacle (5) pour l'injecteur (2), dans lequel le corps (3) principal est formé par des tôles (6, 7) reliées entre elles, qui forment ensemble au moins une chambre (8) annulaire qui s'étend autour du réceptacle (5), ladite au moins une chambre (8) annulaire pouvant être reliée à un conduit (13) d'arrivée de fluide froid et à un conduit (14) de sortie de fluide froid.

2. Support (1) suivant la revendication 1, dans lequel ladite au moins une chambre (8) annulaire est formée également au moins en partie avec un boîtier (9) d'un injecteur (2) intégré.

3. Support (1) suivant la revendication 1 ou 2, dans lequel les tôles (6, 7) du corps (3) principal sont des constituants emboutis mutuellement brasés.

4. Support (1) suivant l'une des revendications précédentes, dans lequel le corps (3) principal est collé ou serti à un boîtier (9) d'un injecteur (2) intégré.

5. Support (1) suivant l'une des revendications précédentes, dans lequel la au moins une chambre (8) annulaire comporte un élargissement (10), dans lequel un moteur (11) électrique d'un injecteur (2) intégré est positionné au moins en partie.

6. Support (1) suivant l'une des revendications précédentes, dans lequel un raccordement (12) électrique d'un injecteur (2) intégré mène à l'extérieur du support (1) entre le corps (3) principal et le couvercle (4).

7. Support (1) suivant l'une des revendications précédentes, dans lequel le couvercle (4) peut être relié à un raccordement (15) de fluide d'injection et comporte au moins un moyen (16) de centrage ou un moyen (17) de compensation de dilatation.

8. Support (1) suivant l'une des revendications précédentes, dans lequel, dans ladite au moins une chambre (8) annulaire, il est prévu au moins une tôle (28) de guidage, de sorte que la chambre (8) annulaire se divise en une chambre (29) de courant intérieur et une chambre (30) de courant extérieur.

9. Dispositif (18) d'injection pour un fluide au moyen d'un injecteur (2), dans lequel l'injecteur (2) est intégré dans un support (1) suivant l'une des revendications précédentes et ladite au moins une chambre (8) annulaire est reliée à un circuit (19) de fluide froid.
